# EUROPEAN PATENT SPECIFICATION

(11) **EP 3 696 063 B1**
(45) Date of publication and mention of the grant of the patent: **10.03.2021**
(21) Application number: 20156594.2
(22) Date of filing: 11.02.2020
(51) Int. Cl.: B62J 15/02, F16B 21/08, F16B 35/00, F16B 37/14

(54) **DEVICE FOR ATTACHING MUDGUARD STAYS TO A BICYCLE FRAME**
VORRICHTUNG ZUR BEFESTIGUNG VON KOTFLÜGELSTREBEN AN EINEM FAHRRADRAHMEN
DISPOSITIF DE FIXATION DE SUPPORTS DE GARDE-BOUE SUR UN CADRE DE BICYCLETTE

(30) Priority: 15.02.2019 IT 201900002265
(43) Date of publication of application: 19.08.2020
(73) Proprietor: Eurofender s.r.l., 35010 San Giorgio delle Pertiche PD (IT)
(72) Inventor: Silvestri, Alberto, 35136 Padova (IT)

(56) References cited:
- EP-A2- 0 803 429
- EP-A2- 1 466 822
- DE-U1- 29 721 123
- IT-A1- UA20 164 232
- TW-U- M 524 296
- TW-U- M 544 452

## Description

The field of this invention relates to a device for fixing mudguard holding stays to a bicycle frame.

### Prior art

Numerous devices are known for carrying out the same function as the object of the invention, namely to fix mudguard holding stays to the frame, however the devices of the known art all have their defects.

In fact, there are numerous aforementioned devices that require tools for securing them, some without the possibility of adjustment, but are of the fixed variety.

In fact, as shown in EP0803429 which discloses a device according to the preamble of claim 1, the device is composed of two elements that can be connected together, but a first end of the aforesaid stay is solidly fixed to one of these elements that is joined to the second element without the possibility of any adjustment.

This connection therefore does not allow for any adjustment of the mudguard stay, forcing the assembler to intervene on the second end of the aforementioned stay, namely the one directly connected to the mudguard, in order to be able to adjust the installation of the mudguard in the same axis as the wheel and convenientlyy at some distance from it.

This requirement, therefore, involves a dual intervention by the assembler, an initial intervention that consists in fixing the mudguard stays to the frame, and a second subsequent intervention that involves regulating the extent to which the stays connect with the mudguard itself.

Furthermore, from an accident prevention point of view, the aforementioned intervention on the mudguard could leave the possibility that the mudguard does not detach from the frame remaining joined to the stays, for a possible accident that could occur due to the insertion of a foreign body between the wheel and the mudguard, but instead the mudguard detaches directly from the stays, leaving them with their pointed ends exposed.

This situation would be of serious danger to the user.

One possibility that is envisaged in this patent EP0803429 is that the detachment can take place due to the fact that the size of the force that pulls the stay and detaches it is surpassed, overcoming the impediment of an inclined wall.

Other possibilities of the detachment of a device connected to a mudguard stay are present in EP0962382, with the prediction that a part configured as a hemisphere could come out of its seat.

A similar detachment method is envisaged in a device shown in EP1439115.

However, these connection methods are heavily influenced by the conditions of the surfaces that provide the coupling. Indeed, when there is any water, oil, dirt, etc. the effort to achieve the detachment of the first and second elements that make up the device of the mudguard stays is substantially reduced, and it could happen that a detachment occurs even if there is stress on the mudguard and without a real accident happening.

Furthermore, all the aforesaid devices, set out in the aforementioned patents, are directly connected to a mudguard stay, so that it is not possible to envisage the use in connecting mudguard stays with different diameters.

In fact, very often the assembler does not know in advance the required specifications of the orders that will come in, except for their number and delivery time. Therefore, the assembler should envisage, in advance, the availability of a variety of devices for coupling the mudguard stays in order to meet requests that specify stay diameters of varying sizes.

Finally, it should be taken into account that periodically or occasionally, that the mudguards may need to be removed, also by the average user.

Many plastics, or resins, of which said devices are made, become weakened over time and with direct exposure to sunlight; and a any dismantling of the various elements that make up the device risks cracking or breaking the devices, requiring them to be replaced. In fact, for example in the devices covered by the aforementioned patents, the dismantling procedure takes place without any yielding part being envisaged, but only by levering on the elasticity of the material, in particular on the external material, which is seen to be the one that is weakened the most with the passage of time.

Very often, finally, these operations for detaching the stays from the frame are carried out in conditions that are far from optimal, in chance or precarious situations, so that during detachment the user also finds themselves with one hand holding the bicycle, and the other hand removing the constraint retaining the two elements of the device, and has to finally, at the same time as the two aforementioned operations, also make an effort to take out the stay of the first element from the second, moving the stay away from the frame, thus finding themselves in extreme difficulty when acting alone.

### Objects of the invention

The general purpose of this invention is to overcome all the drawbacks of the prior art.

A further object of this invention is to make available a device for attaching mudguard stays to the frame (hereinafter also only coupling) that is easy to install.

A particular object of this invention is to make available a coupling that is extremely secure in retaining the mudguard stay. Another object of this invention is to make available an attachment that is simple to replace.

A further object of this invention is to make available a coupling that is free from any problems related to the embrittlement of the material over time.

Another object of this invention is to make available a coupling that is safe and simple to fit.

A further object of this invention is to make available a coupling that simplifies maintenance operations.

Another object of this invention is to make available a coupling that allows the mudguard stays to be used with various sizes of stay diameters.

An even further object of this invention is to make available a coupling that is free of any slack or play.

Another object of this invention is to make available a coupling that permits a wide margin of adjustment.

### Explanation of the invention

The device for attaching the mudguard stays of the invention is defined by the subject-matter of independent claim 1 and consists of at least a pair of elements that can be coupled together with a reversible connection, the first element to be connected to a bicycle frame, and the second element to be connected to a mudguard stay,
where said first element has:
- a first end with devices suited to connecting to the frame; and
- a second opposite end with an aperture opening of the receptive seat of the second element; where said seat is in its end inside said first element, the one close to the devices suitable for being connected to the frame, with the side wall having one or two attachment openings;
where said second element has:
- a first coupling end for insertion through the opening aperture in the seat, where said coupling has devices for coupling with said attachment opening, the coupling and the retention of the coupling devices with said attachment apertures takes place through the coming together of the walls on said coupling devices and walls on said attachment opening, whose position is orthogonal to the insertion direction of the second element within the first element;
- a second opposite end with threading so that a nut with a hole can be screwed on, and which is capable of reducing the cross-section of a hole for receiving the stay, retaining it by friction,
- where the second element is crossed longitudinally by a hole with a cross-section larger than the diameter of the stay, to accommodate the terminal end of the mudguard stay

Additional features of the device for attaching mudguard stays of the invention are specified in dependent claims 2 to 9.

Advantageously, there are two of said coupling devices and are arranged on diametrically opposite sides of said coupling; said receptive seat and said coupling have a complementary and symmetrical section to permit the insertion of the coupling into the seat, along the longitudinal axis, in two situations, one rotated 180° with respect to the other, helping the operator insert the coupling.

Advantageously, said coupling devices are at the terminal end of the coupling on elastic devices, and are protruding with respect to the transverse section of the coupling, being able to assume a lowered position during insertion and protrude through the attachment opening at the end of the insertion of the coupling through the attachment opening in the seat, providing a secure and reliable coupling between the first and second elements.

Advantageously, in an assembled configuration of the first and second elements, in the event of only a single attachment opening, the coupling devices that do not enter the aforementioned opening, keep the coupling engaged in the seat in a condition with residual pressure, due to the push of the coupling devices against the internal wall of the seat, preventing even small movements or slack.

Advantageously, in an assembled configuration of the first and second element, in the event of a double opposed attachment opening, the coupling devices that have entered the aforementioned openings can be easily brought close together, with a pair of opposing actions through the apertures facilitating the detachment of the first and second element.

Advantageously, the front end of the coupling devices has an inclined surface facilitating the decoupling of the first and second element, after which, using a tool, through an attachment opening, the operator, overcoming the elastic devices on which the coupling devices are placed, has moved the terminal end of the said devices, by an amount equal to the orthogonal connection wall and, in continuing pushing with this tool, along said inclined plane, moves the coupling outside the seat.

Advantageously, the elastic coupling devices are placed completely inside the first element, thus allowing the elasticity of these elastic devices to remain protected both from factors responsible for ageing and from strains during normal activity, but also to carry out their operation securely when required.

Advantageously, at least a part of the end of the second element with threading has a cut section due to the presence of one or more longitudinal cuts further increasing the ease of reducing its section and being able to retain stays of different diameters by friction.

Advantageously, the longitudinal crossing hole of the second element facilitates the assembly and adjustment, with its extended travel equal to, or approximately equal to, the longitudinal length of the second element, allowing the operator to insert the tightening nut and the second element on the stay also before the coupling of the second element with the first element, and to adjust the correct depth of locking of the stay within the coupling device with the final tightening of the nut on the threaded end.

One or more of the above characteristics of the coupling device facilitate and make possible:
- the assembly for the symmetry of the coupling and its seat, since the operator does not have to check that the insertion direction is correct;
- a degree of versatility, since the internal hole of the second element can accommodate various mudguard-holder stay diameters, holding them all satisfactorily;
- the preparation and the adjustment of the length of the stay from a few millimetres to several centimetres, for a possible travel as long as the extension the hole of the second element;
- rendering simple any changes in the alignment of the mudguard with respect to the wheel and its approach to it even at a later time, for example the final adjustment before the delivery of the bike to the end customer, and by the user subsequently for personal requirements, by unscrewing the perforated nut to loosen the stay, extracting or inserting the stay within the second element and then re-locking the stay by screwing in the nut.

These advantages and still further objects are all achieved by the device for fixing mudguard stays to a bicycle frame, according to the attached claims.

### Brief description of the drawings

The technical characteristics of the invention, according to the aforesaid objects, can clearly be seen in the content of the claims below, and its advantages will become more readily apparent in the detailed description that follows, made with reference to the accompanying drawings, which illustrate a preferred embodiment, which is purely exemplary and not limiting, in which:

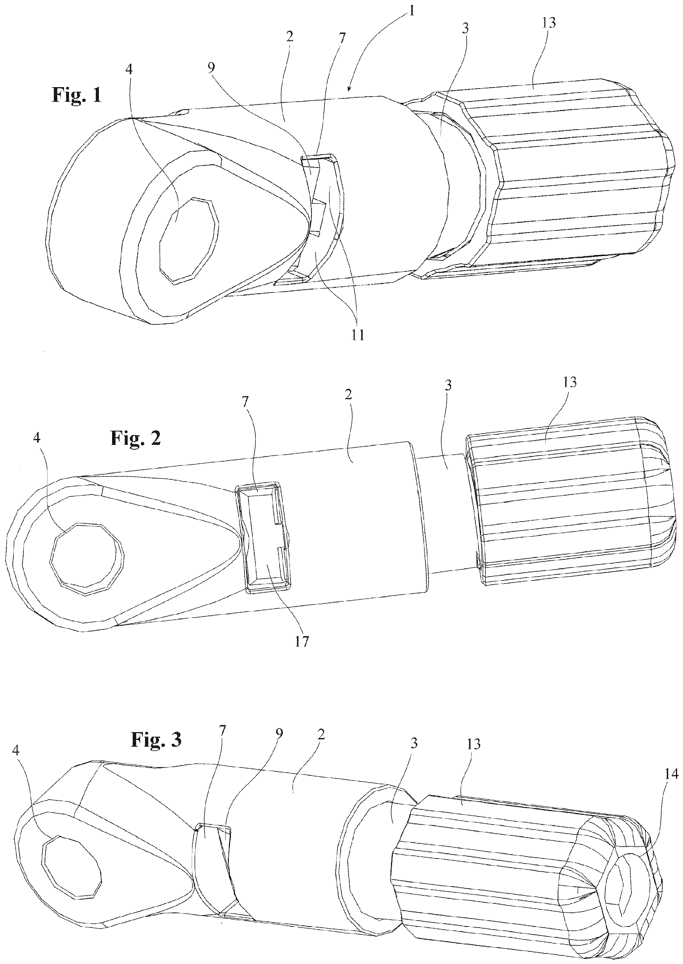

figure 1 shows the device of the invention according to a perspective view;
figure 2 and figure 3 show the device of figure 1 according to different perspective views;

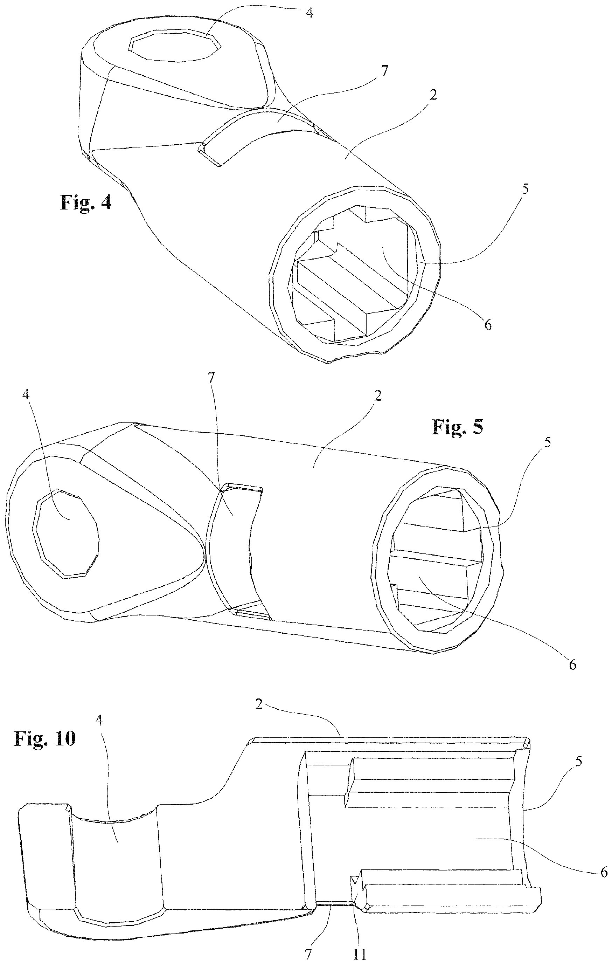

figure 4 and figure 5 show in isolation, according to different perspective views, the first element of the device of the invention,
which connects to the bicycle frame;

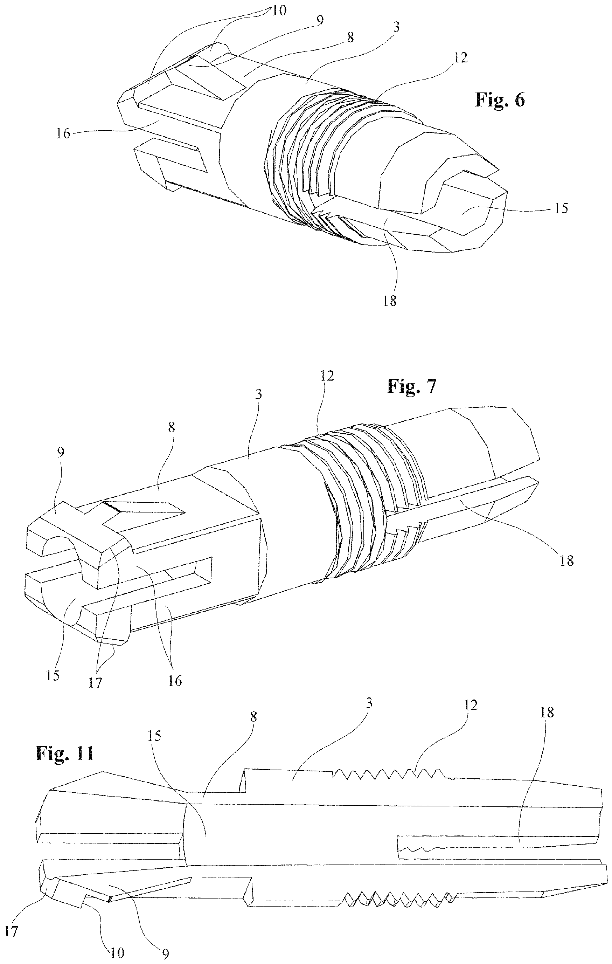

figures 6 and 7 show in isolation, according to different views, the second element of the device of the invention which engages the terminal part of the mudguard stay on one side and enters with its coupling in the seat of the first element.

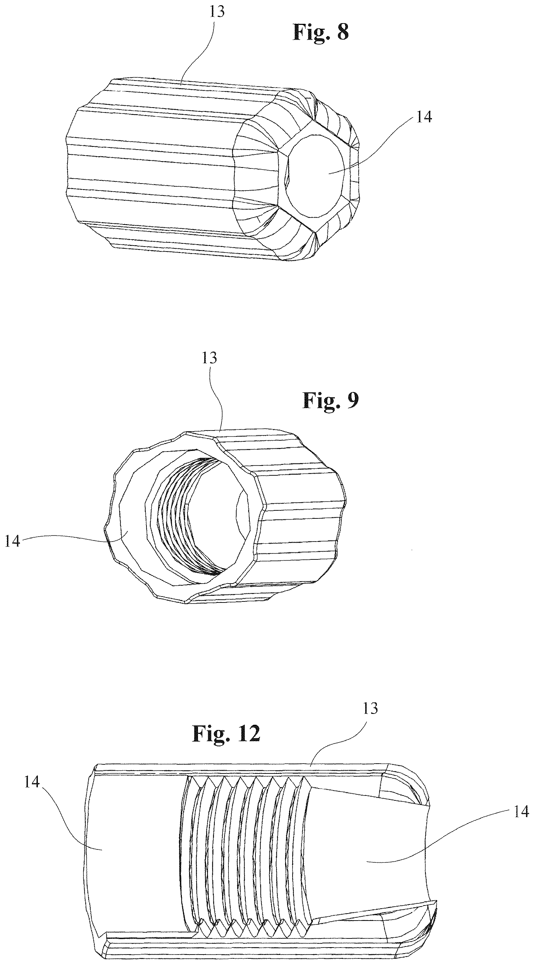

figures 8 and 9 show the hold nut which engages the threading on the external surface of the second element.
Figures 10 to 12 show section views in isolation of the components of the device.

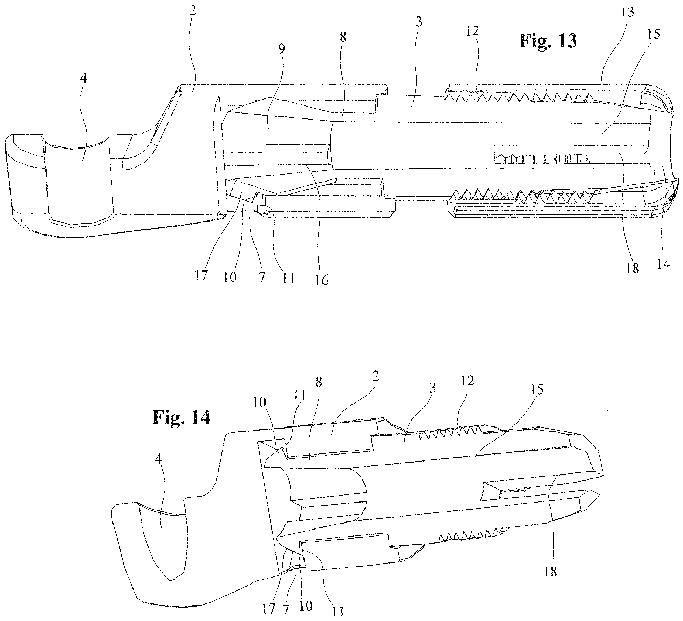

Figures 13 and 14 show two section views of the device, according to two different section planes passing through the longitudinal axis of the device itself.

### Detailed description of an example of a preferred embodiment

With reference to the figures, the device 1 for coupling mudguard stays, the object of the invention, basically consists of two parts, a first element 2 which is connected to the bicycle frame and a second element 3 which is connected to the end part of the mudguard stay, and which holds it thanks to the fixing of a hold nut 13, through whose hole 14 passes the end part of said mudguard holder stay.

Said two elements 2, 3 connect to each other through a reversible connection with the coupling 8 of the second element 3 which enters a specially provided receptive seat 6 included in the first element 2.

This connection between the first element 2 and the second element 3 is stable due to the presence of coupling devices 9, on the terminal end of the coupling 8 which connect with, at the end of the insertion phase of the coupling 8 within the seat 6, a coupling on the first element 2 that takes the form of an attachment opening 7 on the side wall of said seat 6.

The connection between the coupling devices 9 with the attachment opening 7 is accomplished by the mutual support between the attachment wall 11 of the attachment opening 7 with the connection wall 10 of the coupling devices 9. The position of the aforesaid connection 10 and attachment walls 11 is orthogonal to the axis of the insertion movement of the coupling 8 within the seat 6.

Thanks to this arrangement, the constraint created between the first 2 element and the second 3 element of the coupling device 1 is tolerant to any form of dirt that generally creeps into the various parts close to bicycle wheels, in particular the constraint is not conditioned by any oily dirt, as is the case with known coupling devices that are based on the principle of inclined surfaces, in fact oily dirt reduces the friction coefficient, varying the effort required to disconnect the various components.

On the other hand, in the device of the invention, said coupling devices 10 are in the terminal part of the coupling 8 equipped with elastic devices 16, thus being able to insert and engage the coupling 8 in the seat 6, through the opening aperture 5, shift and move closer to the longitudinal axis, with the coupling 8 assuming a section equal to that of the seat 6, and finally, under the thrust of said elastic devices 16, resume their resting position exposed and protruding, away from the longitudinal axis, within the attachment opening 7.

In the above configuration, the elastic devices 16 are kept within the first device 2 that protects them from stresses and the weather, which would age the material, making it fragile and no longer reliable for gripping the coupling device 1.

In the event that there is only one attachment opening 7, the device is preferably equipped with a pair of diametrically opposite coupling devices 9, only one of which enters the attachment opening 7, but the opposite one constantly keeps the coupling 8 under pressure, preventing the creation of play and slack between the first element 2 and the second element 3.

If, on the other hand, there are two attachment openings 7 diametrically opposite to the longitudinal axis on the first element 2, the coupling devices 9 are each joined in the corresponding attachment opening 7, thus simplifying the operations for releasing the first and second element 2, 3, by means of a double action, each with an opposite direction acting on said coupling devices 9 in order to bring them closer to the longitudinal axis of the device, until there is no mutual support between the coupling 10 and connection 11 walls.

In fact, both in the configuration with a single opening and in the configuration with a double opening, the reversibility of the coupling can take place due to the aforementioned lack of support between the coupling 10 and connection 11 walls.

In fact, the detachment of the first and second elements is expected to occur both due to excessive pulling on the mudguard stay due to an accident when the bicycle is being used, and also for a maintenance operation carried out by the operator who pushes said coupling devices 9 with a tool, bringing them closer to the axis.

To facilitate the uncoupling, the end part of said coupling devices 9, available through the opening 7, is configured with a wall 17 that is inclined with respect to the longitudinal axis, available through said opening 7, in such a way that the operator, acting on said inclined wall, is able, first of all, to eliminate the mutual support between the coupling and support walls, and continuing with a further action in the direction orthogonal to the longitudinal axis, pushes the second 3 element towards the outside of the first element 2 causing it to come out after the release.

This possibility simplifies the operation for detaching the two elements 2, 3, first removing the coupling and partially pushing the first one out of the second element, partially detaching them. A further advantageous feature of the coupling device 1 consists in providing the second element 3, equipped with a coaxial hole 15, with a sufficient cross-section to accommodate the end part of a mudguard stay.

The extension of this coaxial hole 15 corresponds approximately to the entire extension of said second element 3, thus allowing a wide margin of adjustment for the assembler who can adjust, by moving the stay forward or backward, the end part of the stay within the second element 3, and sliding it inside said hole and then fixing it to the desired amount by tightening the hold nut 13 on the respective threading 12 on the outside of said second element 3.

To make the coupling device 1 even more versatile, the end part of the second element 3, which engages the hold nut 13, (through whose hole 14 the end part of the stay is inserted), is provided with additional flexibility with the provision of one or more longitudinal cuts 18, with a through-slot, so that it can be tightened to retain a wide variety of mudguard stays that also have different diameters.

Again with the aim of simplifying the assembler's job, the receptive seat 6 has a quadrangular section, with a pair of opposite sides larger than the other pair, and also the coupling 8 has a similar section, so that the coupling between the first element 2 and the second element 3 can take place in two positions, one rotated with respect to the other by 180°.

## Claims

1. Device for attaching mudguard stays comprising at least one pair of elements that can be joined together with a reversible connection, namely a first element (2) to be connected to a bicycle frame and a second element (3) to be connected to a mudguard holder stay,
**characterised in that** said first element (2) has:
- a first end with devices (4) suitable for connecting with the bicycle frame; and
- a second opposite end with an opening (5) of a receptive seat (6) for receiving the second element (3); wherein said receptive seat (6) in its end inside said first element (2), the one close to the devices (4) suitable for being connected to the frame, has one or two attachment openings (7) on a side wall;
wherein said second element (3) has:
- a first end with a coupling (8) for insertion through the opening (5) in the receptive seat (6), wherein there are on said coupling (8) coupling devices (9) for coupling with said one or two attachment openings (7), the coupling and retention of the coupling devices (9) with said one or two attachment openings (7) takes place through the coming together of walls (10) on said coupling devices (9) and walls (11) on said one or two attachment openings (7), whose position is orthogonal to the direction of insertion of the second element (3) inside the first element (2); and
- a second opposite end with a threading (12) to be tightened by a nut (13) with a hole (14), in order to reduce a section of a longitudinal passage hole (15) for holding the mudguard holder stay using friction, wherein
- the second element (3) is traversed longitudinally by said longitudinal passage hole (15) having a cross-section larger than the diameter of the mudguard holder stay for receiving an end of the mudguard holder stay.

2. Device for attaching mudguard stays according to claim 1, **characterised by** the fact that there are two coupling devices (9) on opposite sides of said coupling (8), wherein said receptive seat (6) and said coupling (8) have complementary and symmetrical sections to allow for the insertion of the coupling (8) in the receptive seat (6), along the longitudinal axis of the device, in two situations, one rotated 180° with respect to the other.

3. Device for attaching mudguard stays according to claim 1, **characterised by** the fact that said coupling devices (9) are placed at a terminal end of the coupling (8) on elastic devices (16), and protrude with respect to a cross-section of the coupling (8), being able to assume a lowered position during the insertion and protrude through the one or two attachment openings (7) at the end of the insertion of the coupling (8) through the opening (5) in the receptive seat (6), providing a coupling between the first element (2) and the second element (3).

4. Device for attaching mudguard stays according to claim 1, **characterised by** the fact that, in a configuration with the first (2) and second (3) elements connected, in the event of a single attachment opening (7), the coupling devices (9) which are diametrically opposite those connected to and entering the aforesaid attachment opening (7), maintain the coupling (8) inserted in the receptive seat (6) in a condition with a residual pressure, due to a thrust of the aforesaid coupling devices (9) against an inner wall of the receptive seat (6).

5. Device for attaching mudguard stays according to claim 1, **characterised by** the fact that, in a configuration with the first (2) and second (3) elements connected, in the event of two attachment openings (7), the first one being diametrically opposite the second one, the coupling devices (9) that enter the aforesaid attachment openings (7), are brought together closer to the longitudinal axis of the device with a pair of opposite actions through the attachment openings (7).

6. Device for attaching mudguard stays according to claim 1, **characterised by** the fact that a front end of the coupling devices (9) has an inclined surface (17) available through said one or two attachment openings (7) for the disconnection of the first (2) and second (3) elements.

7. Device for attaching mudguard stays according to claim 3, **characterised by** the fact that the elastic devices (16) are placed fully inside the first element (2) in a configuration with the first (2) and second (3) elements connected.

8. Device for attaching mudguard stays according to claim 1, **characterised by** the fact that at least a part of the second end with the threading (12) of the second element (3) is a cut section due to the presence of one or more longitudinal cuts (18).

9. Device for attaching mudguard stays according to claim 1, **characterised by** the fact that the longitudinal passage hole (15) of the second element (3) extends for a length equal to, or approximately equal to, the longitudinal length of the second element (3).

## Patentansprüche

1. Vorrichtung zur Befestigung von Schutzblechstreben bestehend aus mindestens einem Paar von Elementen, die mit einer lösbaren Verbindung zusammengefügt werden können, einem ersten Element (2) zur Verbindung mit einem Fahrradrahmen und einem zweiten Element (3) zur Verbindung mit einer Schutzblechhalterstrebe,
wobei das erste Element (2) Folgendes aufweist:
- ein erstes Ende mit Vorrichtungen (4), die zum Verbinden mit dem Rahmen geeignet sind; und
- ein zweites Ende, das einer Öffnung (5) eines Aufnahmesitzes (6) des zweiten Elements (3) gegenüberliegt; wobei der Sitz (6) an seinem Ende innerhalb des ersten Elements (2), demjenigen nahe den Vorrichtungen (4), die zum Verbinden mit dem Rahmen geeignet sind, eine oder zwei Montageöffnungen (7) an der Seitenwand aufweist;
wobei das zweite Element (3) Folgendes aufweist:
- ein erstes Kupplungsende (8) zum Einführen durch die Öffnung (5) in den Sitz (6), wobei sich an der Kupplung (8) Vorrichtungen (9) zum Kuppeln mit der Montageöffnung (7) befinden, wobei das Kuppeln und Halten der Kupplungsvorrichtungen (9) mit der Montageöffnung (7) durch das Zusammentreffen von Wänden (10) an den Kupplungsvorrichtungen (9) und Wänden (11) an der Montageöffnung (7) stattfindet, deren Position orthogonal zur Richtung des Einführens des zweiten Elements (3) in das erste Element (2) ist;
- ein zweites, gegenüberliegendes Ende mit einem Gewinde (12), das durch eine Mutter (13) mit einem Loch (14) festgezogen werden kann, und das den Querschnitt eines Lochs (15) der Schutzblechhaltererstrebe durch Halten mittels Reibung verringern kann,
- wobei das zweite Element (3) in Längsrichtung von einem Loch (15) durchquert wird, das einen Querschnitt aufweist, der größer ist als der Durchmesser der Schutzblechhaltestrebe zur Aufnahme des Endes der Schutzblechhaltestrebe.

2. Vorrichtung zur Befestigung von Schutzblechstreben nach Anspruch 1, **dadurch gekennzeichnet, dass** zwei Kupplungsvorrichtungen (9) auf gegenüberliegenden Seiten der Kupplung (8) vorhanden sind, wobei der Aufnahmesitz (6) und die Kupplung (8) komplementäre und symmetrische Abschnitte aufweisen, damit die Kupplung (8) in den Sitz (6) entlang der Längsachse in zwei Situationen eingesetzt werden kann, wobei eine um 180° in Bezug auf die andere gedreht ist.

3. Vorrichtung zur Befestigung von Schutzblechstreben nach Anspruch 1, **dadurch gekennzeichnet, dass** die Kupplungsvorrichtungen (9) am Ende der Kupplung (8) auf elastischen Vorrichtungen (16) angebracht sind und in Bezug auf den Querschnitt der Kupplung (8) vorstehen, wobei sie in der Lage sind, während des Einsetzens eine abgesenkte Position einzunehmen und am Ende des Einsetzens der Kupplung (8) durch die Öffnung (5) im Sitz (6) durch die Montageöffnung (7) vorstehen, wodurch eine Kupplung zwischen dem ersten Element (2) und dem zweiten Element (3) hergestellt wird.

4. Vorrichtung zur Befestigung von Schutzblechstreben nach Anspruch 1, **dadurch gekennzeichnet, dass** in einer Konfiguration mit dem verbundenen ersten (2) und zweiten (3) Element im Falle einer einzigen Montageöffnung (7) die Kupplungsvorrichtungen (9), die den verbundenen diametral gegenüberliegen und in die genannte Öffnung (7) eintreten, die in den Sitz (6) eingeführte Verbindung (8) in einem Zustand mit einem Restdruck halten, und zwar infolge des Drucks der Kupplungsvorrichtungen (9) gegen die Innenwand des aufnehmenden Sitzes (6).

5. Vorrichtung zur Befestigung von Schutzblechstreben nach Anspruch 1, **dadurch gekennzeichnet, dass** in einer Konfiguration mit dem verbundenen ersten (2) und zweiten (3) Element im Falle einer doppelten Montageöffnung (7), wobei das erste dem zweiten diametral gegenüberliegt, die Kupplungsvorrichtungen (9), die nicht in die zuvor genannten Öffnungen (7) eindringen, nahe beieinander liegen, mit einem Paar von entgegengesetzten Wirkungen durch die Montageöffnungen (7).

6. Vorrichtung zur Befestigung von Schutzblechstreben nach Anspruch 1, **dadurch gekennzeichnet, dass** das vordere Ende der Kupplungsvorrichtungen (9) eine schräge Fläche (17) aufweist, die durch die Montageöffnungen (7) für die Trennung des ersten (2) und zweiten (3) Elements zugänglich ist.

7. Vorrichtung zur Befestigung von Schutzblechstreben nach Anspruch 3, **dadurch gekennzeichnet, dass** die elastischen Verbindungsvorrichtungen (16) vollständig im Inneren des ersten Elements (2) angeordnet sind.

8. Vorrichtung zur Befestigung von Schutzblechstreben nach Anspruch 1, **dadurch gekennzeichnet, dass** mindestens ein Teil des Endes mit Gewinde (12) des zweiten Elements (3) aufgrund des Vorhandenseins von einem oder mehreren Längsschnitten (18) ein Schnittabschnitt ist.

9. Vorrichtung zur Befestigung von Schutzblechstreben nach Anspruch 1, **dadurch gekennzeichnet, dass** sich das Längsdurchgangsloch (15) des zweiten Elements (3) über eine Länge erstreckt, die der Längslänge des zweiten Elements (3) entspricht oder annähernd entspricht.

## Revendications

1. Dispositif d'accrochage des tiges de garde-boue qui comprend au moins une paire d'éléments pouvant être accouplés avec un lien réversible, un premier élément (2) à associer à un cadre de vélo et un deuxième élément (3) à associer à une tige de garde-boue,
ledit premier élément (2) étant équipé d':
- une première extrémité de moyens (4) aptes à s'associer au cadre ; et
- une deuxième extrémité opposée d'une ouverture (5) d'un siège de réception (6) du deuxième élément (3); ledit siège de réception (6) étant à l'extrémité interne dudit premier élément (2), celui proche des moyens (4) aptes à s' associer au cadre, pourvu sur la paroi latérale d'une ou deux ouvertures d'accrochage (7);
le deuxième élément (3) étant équipé d':
- une première extrémité de couplage (8) pour l'insertion à travers l'ouverture (5) dans le siège de réception (6), étant présents sur ledit couplage (8) des moyens d'accouplement (9) avec ladite ouverture d'accrochage (7), l'accouplement et le maintien des moyens d'accouplement (9) avec ladite ouverture d'accrochage (7) se fait par le rapprochement des parois (10) présentes sur lesdits moyens d'accouplement (9) et les parois (11) sur ladite ouverture d'accrochage (7) dont la position est orthogonale à la direction d'insertion du deuxième élément (3) dans le premier élément (2) ;
- une deuxième extrémité opposée, avec un filetage (12) pour être vissée par un écrou (13) à trou (14), et apte à réduire la section d'un trou de réception (15) de la tige de garde-boue, la maintenant par friction,
- le deuxième élément (3) étant traversé longitudinalement par un trou de réception (15) de section supérieure au diamètre de la tige de garde-boue pour recevoir l'extrémité de la tige de garde-boue.

2. Dispositif d'accrochage des tiges de garde-boue selon la revendication 1, **caractérisé par le fait que** lesdits moyens d'accouplement (9) sont au nombre de deux et disposés de part et d'autre dudit accouplement (8), dans lequel ledit siège de réception (6) et ledit couplage (8) présentent des sections complémentaires et symétriques entre elles pour permettre l'insertion du couplage (8) dans le siège de réception (6), selon l'axe longitudinal, dans deux situations, l'une tournée de 180° degré par rapport à l'autre.

3. Dispositif d'accrochage des tiges de garde-boue selon la revendication 1, **caractérisé par le fait que** lesdits moyens d'accouplement (9) sont placés à l'extrémité du couplage (8) sur des moyens élastiques (16), et faisant saillie par rapport à la section transversale du couplage (8), pouvant prendre une position abaissée lors de l'insertion et faire saillie à travers l'ouverture d'accrochage (7) à la fin d'insertion de l'accouplement (8) à travers l'ouverture (5) dans le siège de réception (6), permettant un accrochage entre le premier (2) et le second élément (3).

4. Dispositif d'accrochage des tiges de garde-boue selon la revendication 1 **caractérisé par le fait que**, dans une configuration associée du premier (2) et du second élément (3), dans le cas d'une seule ouverture d'accrochage (7), les moyens d'accouplement (9) qui sont dans une position diamétralement opposée à ceux accouplés et pénètrent dans l'ouverture susmentionnée (7), maintiennent le couplage (8) inséré dans le siège de réception (6) dans un état de pression résiduelle, du à la poussée des moyens d' accouplement (9) contre la paroi interne du siège de réception (6).

5. Dispositif d'accrochage des tiges de garde-boue selon la revendication 1 **caractérisé par le fait que** dans une configuration associée du premier (2) et du deuxième élément (3), en cas de double ouverture d'accrochage (7), le premier diamétralement opposé au second, les moyens d'accouplement (9) qui n'entrent pas dans les ouvertures précitées (7) peuvent être rapprochés, avec une paire d'actions opposées à travers les ouvertures d'accrochage (7).

6. Dispositif d'accrochage des tiges de garde-boue selon la revendication 1 **caractérisé par le fait que** l'extrémité avant des moyens d'accouplement (9) présente une surface inclinée (17) disponible à travers lesdites ouvertures d'accrochage (7) par dissociation entre le premier (2) et le deuxième élément (3).

7. Dispositif d'accrochage des tiges de garde-boue selon la revendication 3, **caractérisé par le fait que** les moyens d'accouplement élastiques (16) sont placés complètement à l'intérieur du premier élément (2).

8. Dispositif d'accrochage des tiges de garde-boue selon la revendication 1, **caractérisé par le fait qu'**au moins une partie de l'extrémité pourvue de filetage (12) du second élément (3) présente une section coupée à cause de la présence d'une ou plusieurs entailles longitudinales (18).

9. Dispositif d'accrochage des tiges de garde-boue selon la revendication 1, **caractérisé par le fait que** le trou de traversement longitudinal (15) du second élément (3) s'étend sur une longueur égale ou sensiblement égale à la longueur du second élément (3).
